# EUROPEAN PATENT APPLICATION

(11) **EP 2 650 265 A1**
(43) Date of publication of application: **16.10.2013**
(21) Application number: 13162487.6
(22) Date of filing: 05.04.2013
(51) Int. Cl.: C03C 11/00, C03C 17/06, C08K 3/40, C08K 7/28

(54) **Glass bubble, master batch including the same, and resin particle with metal film formed on surface thereof**

(30) Priority: 09.04.2012 KR 20120036870; 14.06.2012 KR 20120063961
(71) Applicant: Samsung Electronics Co., Ltd., Gyeonggi-do 443-742 (KR)
(72) Inventor: HAN, Seung San, Gyeonggi-do (KR); LEE, Jung Hwan, Gyeonggi-do (KR); KIM, Kyung Hwan, Gyeonggi-do (KR); CHO, Jin Hyun, Seoul (KR)
(74) Representative: Moy, David

(57) **Abstract**

Disclosed herein are glass bubbles that are surface treated to obtain a metallic texture, and have a similar specific gravity to that of plastic. Thus, there is a low possibility of occurrence of appearance defects even when a material obtained by compounding the glass bubbles and the plastic is injection molded and a master batch including the glass bubbles and plastic to improve a miscibility of the glass bubbles and the plastic. The glass bubbles each include a spherical shell and a surface treatment layer formed on a surface of the shell, the spherical shell having a hollow hole so as to decrease a specific gravity of the glass bubbles and the surface treatment layer being formed by surface treatment to obtain a metallic texture.

## Description

### BACKGROUND

### 1. Field

Exemplary embodiments of the disclosure relate to glass bubbles added so as to enable a resin material used as an exterior material of a product to have a metallic texture, and a master batch including the same.

### 2. Description of the Related Art

Exterior materials used in products such as mobile phones, notebook computers, PDA, and the like, are generally resin materials, such as plastic. There are many cases where these exteriors are fabricated to have a metallic texture.

To enable a resin material such as plastic to have a metallic texture, the plastic may be surface treated by a two or three-step coating or by an injection molding process used to manufacture injection molded products by compounding particles exhibiting a metallic texture, such as pearl/metal particles, with plastic has been predominantly used.

However, coating of the surface of plastic incurs problems in terms of eco-friendliness due to generation of toxic solvents and carbon dioxide, and the injection molding method. These problems are compounded by an additive with plastic which incurs problems such as appearance defects caused by different flow patterns of the two materials, when injection molding is performed.

### SUMMARY

According to the present invention there is provided a glass bubble, master batch, and an injection molded product as set forth in the appended claims. Other features of the invention will be apparent from the dependent claims, and from the description which follows.

Therefore, it is an aspect of the exemplary embodiments to provide glass bubbles that are surface treated to obtain a metallic texture, and have a similar specific gravity to that of plastic. Thus, there is a low possibility of occurrence of appearance defects, even when the glass bubbles are compounded with the plastic.

It is another aspect of the exemplary embodiments to provide a master batch including the glass bubbles and plastic in order to improve a miscibility of the glass bubbles and the plastic as well as an injection molded product including the master batch or the glass bubbles.

It is a further aspect of the exemplary embodiment to provide a resin particle that is surface treated such that the resin particle itself has a metallic texture, a method of preparing the resin particle, and a method of manufacturing an injection molded product including the resin particle.

Additional aspects of the invention will be set forth in part in the description which follows and, in part, will be obvious from the description, or may be learned by practice of the invention.

In accordance with one aspect of the exemplary embodiments, a glass bubble includes a spherical shell and a surface treatment layer formed on a surface of the shell. The spherical shell has a hollow hole inside so as to decrease a specific gravity of the glass bubble. The surface treatment layer is formed by surface treatment in order to obtain a metallic texture.

The surface treatment layer may include metal particles.

The surface treatment may be performed by at least one of sputtering, plating, and deposition using a metal material.

The glass bubble may have a specific gravity of about 0.2 to about 2.5.

The glass bubble may have a diameter of about 5 to about 700 µm.

The glass bubble may have a specific gravity of about 0.95 to about 1.4.

In accordance with another aspect of the exemplary embodiments, a master batch includes glass bubbles, each including a spherical shell and a surface treatment layer formed on a surface of the shell, the spherical shell having a hollow hole inside so as to decrease a specific gravity of the glass bubble. The surface treatment layer is formed by surface treatment to obtain a metallic texture and resin in order to disperse the glass bubbles.

The resin may be plastic.

The glass bubbles may have a specific gravity of about 0.2 to about 2.5.

The surface treatment may be performed by at least one of sputtering, plating, and deposition using a metal material.

In an exemplary embodiment, the amount of the glass bubbles may be about 0.1 to about 50 wt%.

In accordance with another aspect of the exemplary embodiment, there is provided an injection molded product manufactured by compounding a master batch including glass bubbles, each including a spherical shell and a surface treatment layer formed on a surface of the shell. The spherical shell has a hollow hole inside so as to decrease a specific gravity of the glass bubbles and the surface treatment layer is formed by surface treatment to obtain a metallic texture, and resin to disperse the glass bubbles, with the resin.

The amount of the glass bubbles of the master batch may be from about 0.1 to about 50 wt%.

The glass bubbles may have a specific gravity of about 0.2 to about 2.5.

The surface treatment may be performed by at least one of sputtering, plating, and deposition using a metal material.

In accordance with another aspect of the exemplary embodiments, a resin particle has a metal film on a surface thereof to obtain a metallic texture.

The resin particle may be plastic.

The resin particle may be of a pellet type.

The metal film may include at least one of copper (Cu), nickel (Ni), aluminum (Al), zinc (Zn), chromium (Cr), and titanium (Ti).

In accordance with another aspect of the exemplary embodiments, a method of preparing a resin particle includes forming a metal film on a surface of the resin particle.

In accordance with another aspect of the exemplary embodiments, a method of manufacturing an injection molded product includes forming a metal film on a surface of a resin particle and injection molding the resin particle with the metal film formed on the surface thereof.

The resin particle may be plastic.

The resin particle may be of a pellet type.

The metal film may include at least one of Cu, Ni, Al, Zn, Cr, and Ti.

Formation of the metal film on the surface of the resin particle may be performed by at least one of electroless plating, ion plating, sputtering, vacuum deposition, immersion plating, and spray plating.

The formation of the metal film on the surface of the resin particle may include washing the resin particle, forming an uneven portion on a surface of the washed resin particle, applying catalyst particles on the surface of the resin particle having an uneven portion formed thereon; and exposing the resin particle with the catalyst particles applied thereon to a plating solution which contains plating ions.

The catalyst particles may include a Pd-Sn compound.

The method of manufacturing an injection molded product may further include ionizing Sn and Pb before exposure of the resin particle to the plating solution.

The plating solution may further include a reducing agent and a pH adjuster.

An exemplary embodiment may further provide a glass bubble with a metallic texture, the glass bubble including: a spherical shell having a hollow hole to decrease a specific gravity of the glass bubble; and a surface treatment layer formed on the spherical shell, wherein the surface treatment layer obtains a metallic texture. The surface treatment layer may include metal particles.

An exemplary embodiment may further provide a master batch including: a plurality of glass bubbles, each having a hollow hole for decreasing a specific gravity of the glass bubble; a surface treatment layer on each glass bubble, wherein each surface treatment layer obtaining a metallic texture; and a resin to disperse the glass bubbles, wherein the resin may be plastic. The resin particles themselves may be surface treated with metal particles.

### BRIEF DESCRIPTION OF THE DRAWINGS

These and/or other aspects of the exemplary embodiments will become apparent and more readily appreciated from the following description, taken in conjunction with the accompanying drawings of which:
FIG. 1 is a flowchart which explains conventional surface treatment of a plastic exterior by a coating method;
FIGS. 2A and 2B are views which illustrate a phenomenon occurring when a material obtained by compounding plastic and pearl/metal particles is injection molded;
FIG. 3 is a view which illustrates a structure of glass bubbles according to an exemplary embodiment;
FIG. 4A is a view which illustrates a surface treatment process of the glass bubbles according to an exemplary embodiment by sputtering;
FIG. 4B is a view which illustrates a surface treatment process of the glass bubbles according to an exemplary embodiment by vacuum deposition;
FIG. 4C is a view which illustrates a surface treatment process of the glass bubbles according to an exemplary embodiment by ion plating;
FIG. 5A is a view which illustrates a structure of a master batch according to an exemplary embodiment;
FIG. 5B is a view illustrating a method of compounding the master batch according to an exemplary embodiment with plastic;
FIG. 6 is a cross-sectional view of a resin particle according to an exemplary embodiment;
FIG. 7 is a flowchart which explains a process for forming a metal film on a surface of a resin pellet by electroless plating, according to an exemplary embodiment;
FIG. 8A is a view which illustrates a process of plating a surface of a resin pellet by sputtering, according to an exemplary embodiment;
FIG. 8B is a view which illustrates a process of plating a surface of a resin pellet by vacuum deposition, according to an exemplary embodiment;
FIG. 8C is a view which illustrates a process of plating a surface of a resin pellet by ion plating, according to an exemplary embodiment; and
FIG. 9 is a view which illustrates manufacture of an injection molded product including a master batch according to an exemplary embodiment and a resin raw material or including a resin pellet according to an exemplary embodiment.

### DETAILED DESCRIPTION

Reference will now be made in detail with respect to the exemplary embodiments, examples of which are illustrated in the accompanying drawings, wherein like reference numerals refer to like elements throughout.

Hereinafter, one or more embodiments will be described in detail with reference to the accompanying drawings.

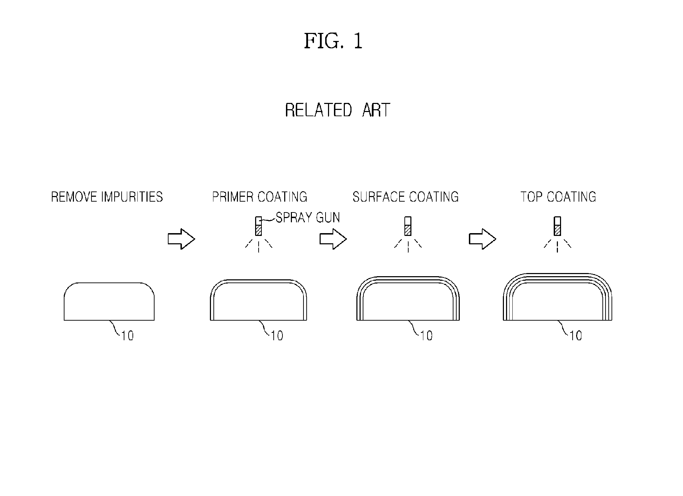

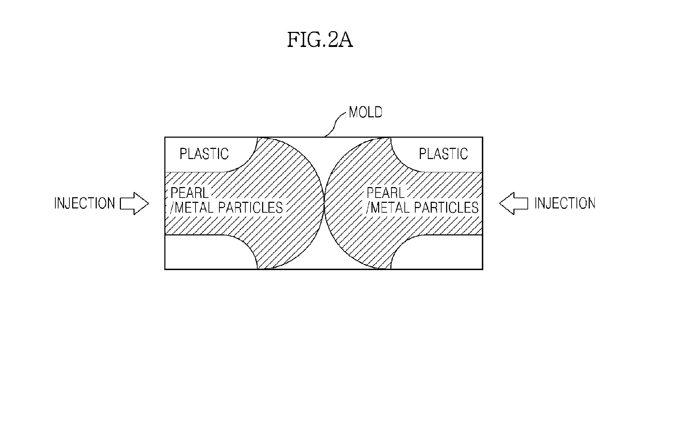

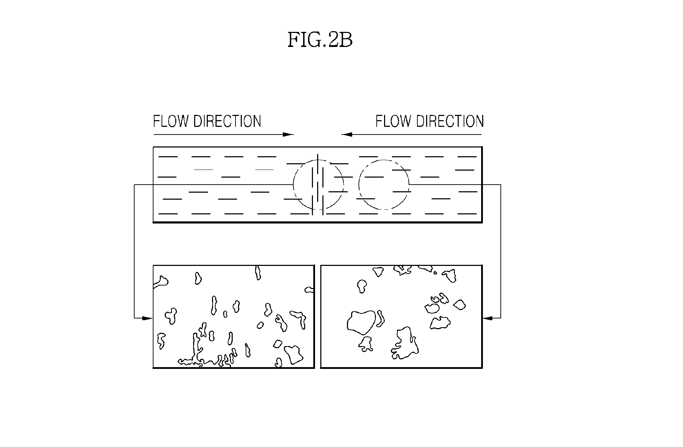

FIG. 1 is a flowchart which explains conventional surface treatment of a plastic exterior by coating. FIGS. 2A and 2B are views which illustrate phenomenon occurring when a material obtained by compounding plastic and pearl/metal particles is injection molded.

As illustrated in FIG. 1, according to a known method of enabling a surface of a plastic exterior material to have a metallic texture, impurities are removed from the surface of the plastic exterior material, a coating material exhibiting the metallic texture is injected into a spray gun, and then the resulting plastic exterior material is subjected to primer coating for coating the plastic exterior material with a primer, surface coating enabling a top surface thereof to have smoothness, and top coating for plastering and weatherability, thereby coating the surface of the exterior material with the coating material exhibiting the metallic texture.

However, the existing method generates a toxic solvent and carbon dioxide through a coating process, and metallic colored raw materials exhibiting a metallic texture entail coating of a base coat and a top coat, and thus, the thickness of the coated raw material increases. In addition, two or three-step coating needs to be performed, which results in increase in raw material costs according to multistep manufacturing processes.

Therefore, as an alternative to the existing coating process, an injection molding process by compounding of metal particles, as illustrated in FIGS. 2A and 2B, has been developed.

As illustrated in FIG. 2A, when a material obtained by compounding plastic, which is a constituent material of an exterior material, with pearl/metal particles, is injected into a mold from right and left directions into the mold, the injected materials flow in opposite directions. In this regard, flow patterns of the plastic and the pearl/metal particles may vary due to a difference between specific gravities thereof, which leads to appearance defects of the plastic exterior material.

In addition, as illustrated in FIG. 2B, orientation of the pearl/metal particles, which are of a plate type, occurs at a position where the materials injected from the right and left directions meet, and thus, portions of the surface of the exterior material which have different areas in which light is reflected are formed, which also results in appearance defects.

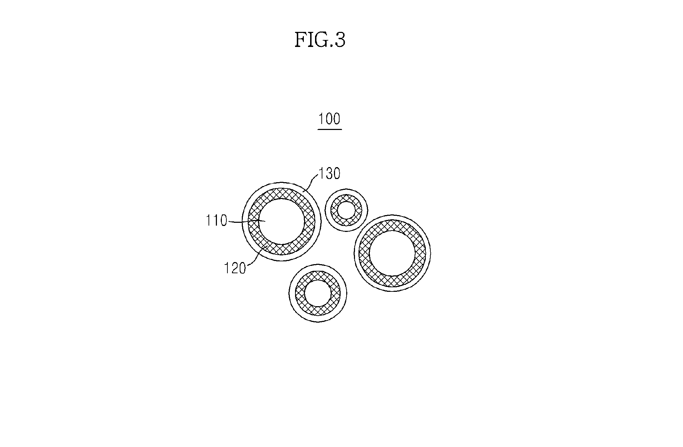

FIG. 3 is a view illustrating a structure of glass bubbles 100 according to an exemplary embodiment.

Referring to FIG. 3, the glass bubbles 100 each include a spherical shell 120 and a surface treatment layer 130 formed on a surface of the shell 120. Here, the spherical shell 120 has a hollow hole 110 inside so as to reduce a specific gravity of the glass bubbles 100 and the surface treatment layer 130 is formed by surface treatment to obtain a metallic texture.

The surface treatment is used for the glass bubbles 100 to have a metallic texture, which enables the glass bubbles 100 to replace existing pearl/metal particles. For example, the glass bubbles 100 may be surface treated by plating, deposition, sputtering, or the like, and a detailed description thereof will be provided below.

As described above, the orientation phenomenon occurs due to a difference between aspect ratios of plastic and pearl/metal particles when the material obtained by compounding the plastic and the pearl/metal particles is injection molded. In contrast, the glass bubbles 100 according to an exemplary embodiment have a spherical shape and thus do not undergo the orientation phenomenon and prevent appearance defects caused thereby.

In addition, the glass bubbles 100 each have the hollow hole 110 inside, and thus may have a lower specific gravity than existing pearl/metal particles. When the specific gravity of the glass bubbles 100 is the same as or similar to that of a resin used as an exterior material, a difference between flow patterns of the glass bubbles 100 and the resin may be effectively prevented.

The glass bubbles 100 have a specific gravity of about 0.2 to about 2.5. A resin constituting an exterior material of a product, in particular, plastic, which is a synthetic resin, has a specific gravity ranging from about 0.2 to about 2.5. Thus, when an injection molding process is performed on a material obtained by compounding the glass bubbles 100 with plastic, appearance defects caused by a difference between flow patterns of the glass bubbles 100 and the plastic may be prevented.

In addition, a difference between specific gravities of a material used as an exterior material and the glass bubbles 100 may be minimized using various methods, such as by adjusting the size of the hollow hole 110. When the glass bubbles 100 have a specific gravity of about 0.95 to about 1.4, a difference between flow patterns of the glass bubbles 100 and plastic having a specific gravity of about 0.95 to about 1.4 may be prevented even when a material obtained by compounding the glass bubbles 100 with the plastic is injection molded.

As illustrated in FIG. 3, the glass bubbles 100 may have various sizes, for example, a diameter of about 5 µm to about 700 µm.

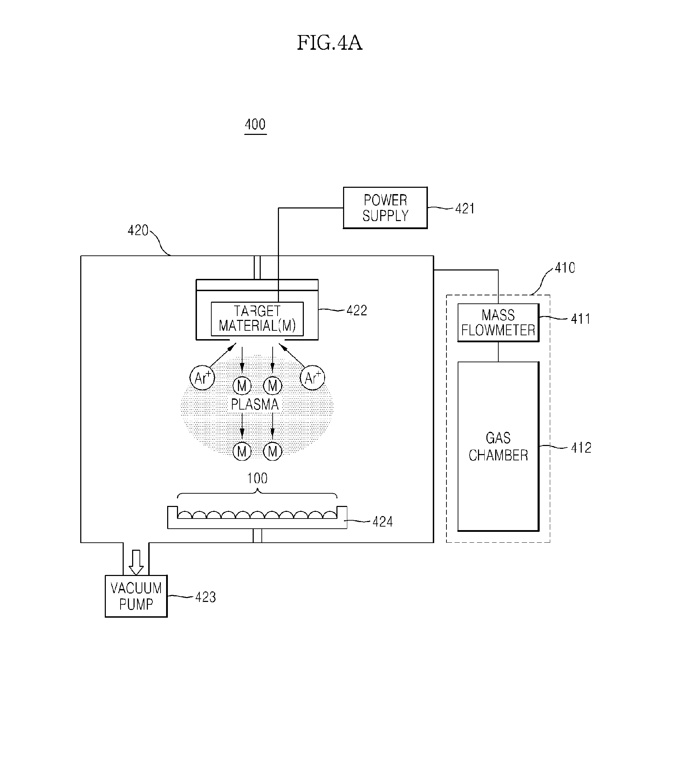

FIGS. 4A through 4C are views illustrating a surface treatment process of the glass bubbles 100 according to an exemplary embodiment.

The glass bubbles 100 may be surface treated by plating, which is coating a surface of a material to be plated with a thin layer of another material. For example, a surface of the glass bubble 100 may be coated with a thin layer of a metal material such as aluminum (Al), copper (Cu), chromium (Cr), titanium (Ti), nickel (Ni), or the like. The plating process may be largely divided into wet plating and dry plating, and thus, the glass bubble 100 may be surface treated by wet plating or dry plating.

For example, the glass bubbles 100 may be surface treated by immersion plating, which is one of the wet plating methods, such that the glass bubbles 100 are immersed in a plating bath containing a melted metal material to form a film of the melted metal material on surfaces of the glass bubbles 100.

Hereinafter, surface treatment processes of the glass bubbles 100 by dry plating methods, i.e., sputtering, vacuum deposition, and ion plating will be described in detail.

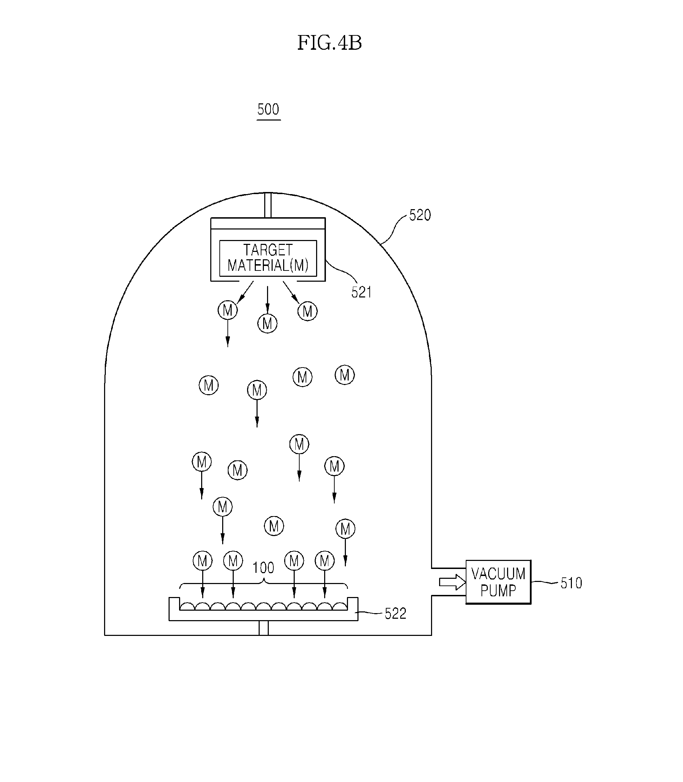

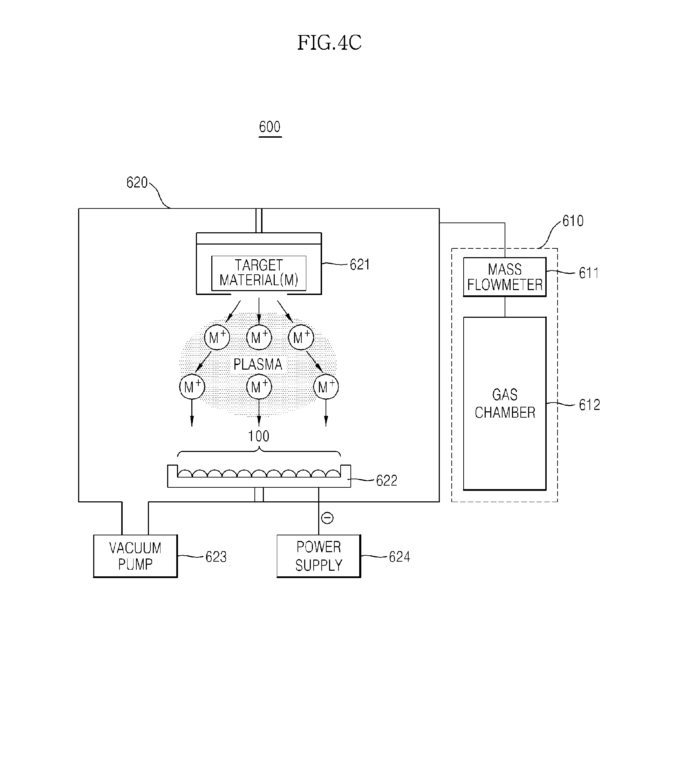

FIG. 4A is a view which illustrates a sputtering surface treatment process of the glass bubbles 100 according to an exemplary embodiment. FIG. 4B is a view which illustrates a vacuum deposition surface treatment process of the glass bubbles 100 according to an exemplary embodiment. FIG. 4C is a view which illustrates an ion plating surface treatment process of the glass bubbles 100 according to an exemplary embodiment.

Sputtering is a process in which ionization of gas is accelerated in a vacuum chamber so that a solid target material is bombarded with the ionized gas and atoms are ejected from the solid target material by energy generated during the bombardment.

Referring to FIG. 4A, a sputtering device 400 includes a vacuum chamber 420 in which sputtering is performed and a gas supply system 410 which supplies gas to the vacuum chamber 420. A gas chamber 412 included in the gas supply system 410 stores a gas to be ionized. In an exemplary embodiment, the gas chamber 412 stores argon (Ar) gas. The vacuum chamber 420 is maintained in a vacuum state by a vacuum pump 423, and controls a mass flowmeter 411 that connects the gas chamber 412 to the vacuum chamber 420 to inject Ar gas into the vacuum chamber 420.

In general, a substrate to be surface treated is mounted at an upper portion of a vacuum chamber and a target material(M) is disposed at a lower portion thereof. In the embodiment illustrated in FIG. 4A, however, considering that a material to be surface treated is the glass bubbles 100 of a particle type, a target material is disposed at an upper portion of the vacuum chamber 420 and the glass bubbles 100 are disposed at a lower portion thereof. The glass bubbles 100 may be accommodated in a specimen holder 424 installed at a lower portion of the vacuum chamber 420.

A gun 422 is connected to a negative electrode via a power supply 421. When the power supply 421 supplies power to the gun 422, a negative electric field is formed and discharge starts and thus plasma is generated. In this regard, Ar gas injected into the vacuum chamber 420 is bombarded with primary and secondary electrons to be ionized and thus dissociated into cations (i.e., Ar+) and electrons. The Ar+ ions are accelerated toward the target material, which is designated by reference numeral M, acting as a negative electrode, by the electric field and the accelerated Ar+ ions are bombarded with the target material M to transfer energy to a surface of the target material M, which leads to ejection of atoms from the target material M. The ejected atoms are attached to surfaces of the glass bubbles 100 disposed at the lower portion of the vacuum chamber 420.

When a metal material such as Al, Cu, Cr, Ti, Ni, or the like is used as the target material M, the glass bubbles 100 may be surface treated to have a metallic texture.

Vacuum evaporation uses a principle that atoms or molecules evaporated in a vacuum state meet with another material having a low temperature to be condensed onto a surface of the material to a solid state again. Hereinafter, the surface treatment process of the glass bubbles 100 by vacuum deposition will be described in detail with reference to FIG. 4B.

Referring to FIG. 4B, a specimen holder 522 in which the glass bubbles 100 are accommodated is disposed at a lower portion of a vacuum chamber 520 maintained in a high vacuum state by a vacuum pump 510, and a target material holder 521 for holding the target material M to be coated on surfaces of the glass bubbles 100 is disposed at an upper portion of the vacuum chamber 520. When the target material M is heated by electric resistance or electron beams, the target material M is evaporated and dispersed. The glass bubbles 100 have a relatively low temperature as compared to the evaporated target material M, and thus, gaseous atoms of the target material M reaching the glass bubbles 100 are condensed on the surfaces of the glass bubbles 100 to form a thin film.

Similarly, when a metal material such as Al, Cu, Cr, Ti, or the like, is used as the target material M, the glass bubbles 100 may be surface treated to have a metallic texture.

Referring to FIG. 4C, a gas chamber 612 in which Ar gas is accommodated is connected to a vacuum chamber 620 via a mass flowmeter 611 of a gas supply system 610, a specimen holder 622 in which the glass bubbles 100 are accommodated is disposed at a lower portion of the vacuum chamber 620 maintained in a vacuum state by a vacuum pump 623, and a target material holder 621 for holding a target material M to be coated on surfaces of the glass bubbles 100 is disposed at an upper portion of the vacuum chamber 620. When a negative voltage is applied to the specimen holder 622 via a power supply 624 and Ar gas is injected into the vacuum chamber 620, plasma is generated. Then, when the target material M is evaporated by heating using the same method as used in the above-described vacuum deposition method, evaporated metal particles are excited to an ionization state by the plasma, the surfaces of the glass bubbles 100 accommodated in the specimen holder 622 to which the negative voltage is applied are bombarded with ionized metal particles M+, and thus, the ionized metal particles M+ having very high energy are adsorbed onto the surfaces of the glass bubbles 100, thereby forming a thin film thereon.

Similarly, when a metal material such as Al, Cu, Cr, Ti, or the like, is used as the target material M, the glass bubbles 100 may be surface treated to have a metallic texture.

In the exemplary embodiments illustrated in FIGS. 4A through 4C, the glass bubbles 100 are disposed at the lower portion of the vacuum chamber 420, 520 or 620 and the target material M is disposed at the upper portion thereof. However, the exemplary embodiments are not limited thereto and various methods may be used so long as they enable the surfaces of the glass bubbles 100 to be efficiently surface treated with atoms or ions of the target material M.

In addition, in the exemplary embodiments illustrated in FIGS. 4A through 4C, the specimen holder 424, 522 or 622 for accommodating the glass bubbles 100 may be vibrated or rotated so that the entire surfaces of the glass bubbles 100 are uniformly surface treated.

The above-described surface treatment methods are only some examples of a method of forming the surface treatment layer 130 on the glass bubble 100, and thus the surface of the glass bubble 100 may have a metallic texture using various other surface treatment methods.

The glass bubbles 100 may be subjected to injection molding after compounding with plastic. In this regard, to achieve miscibility of the glass bubbles 100 with the plastic, the glass bubbles 100 may be highly concentrated in a plastic raw material to prepare a master batch and then the prepared master batch may be compounded with the plastic raw material.

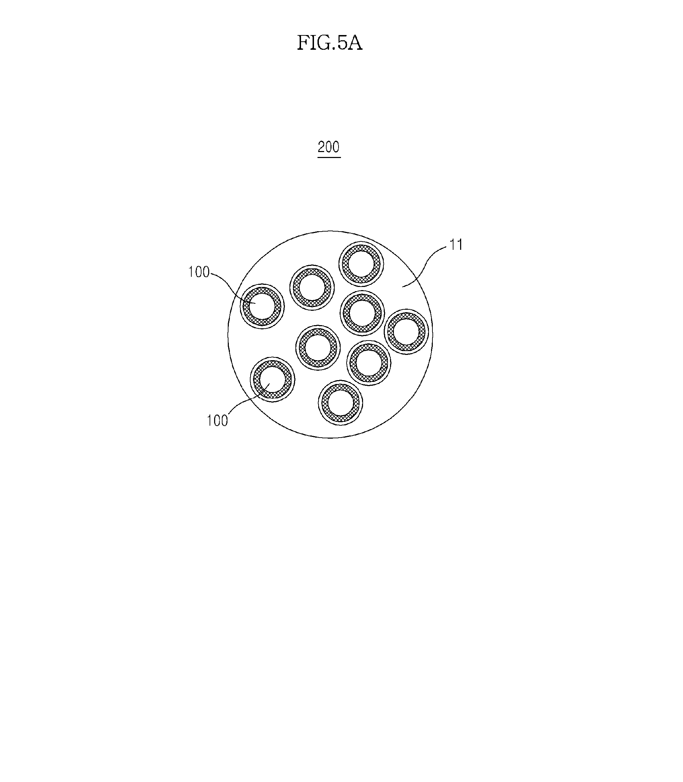

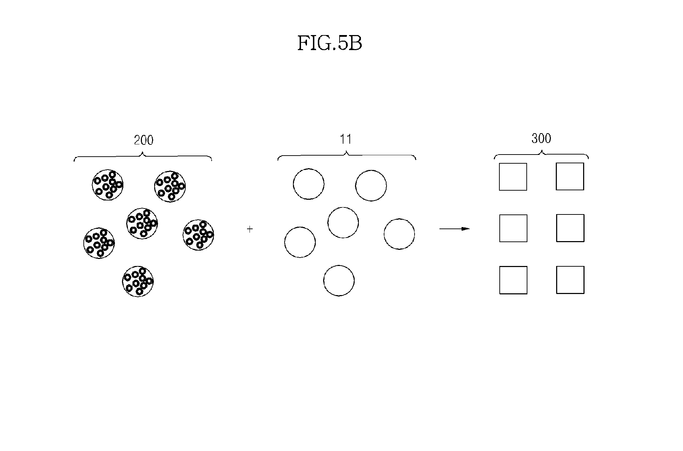

FIG. 5A is a view which illustrates a structure of a master batch 200 according to an exemplary embodiment. FIG. 5B is a view which illustrates a method of compounding the master batch 200 according to an exemplary embodiment with plastic.

The master batch 200 may be prepared by uniformly mixing about 0.1 to about 50 wt% of glass bubbles 100 with a plastic raw material 11 and may have a specific gravity of about 0.5 to about 2.3.

In this regard, a dispersing adjuvant may be added to uniformly mix the glass bubbles 100 and the plastic raw material 11, and an additive such as an antioxidant, a UV stabilizing agent, or the like may be added to improve weatherability and durability of a plastic injection molded product.

As illustrated in FIG. 5A, the master batch 200 may be prepared in such a form that the glass bubbles 100 are uniformly dispersed in the plastic raw material 11, and may be in the form of a pellet, a plate, or a flake.

Also, the glass bubbles 100 may be disposed in various kinds of resin other than plastic in order to form a master batch.

The prepared master batch 200 may be compounded with the plastic raw material 11, as illustrated in FIG. 5B, to be used in injection molding. In this regard, a compound 300 including the master batches 200 and the plastic raw material 11 may be in the form of a cylindrical or tetragonal chip having a size of several millimeters.

In the above-described exemplary embodiments, the glass bubbles 100 are used to impart a metallic texture to the plastic raw material. However, exemplary embodiments are not limited thereto, and the glass bubbles 100 may be used in various materials used as exterior materials of products other than plastic to impart a metallic texture thereto.

In the above-described exemplary embodiments, the glass bubbles are compounded with resin after metal particles are coated on the surfaces of the glass bubbles having a similar specific gravity to that of the resin, without directly compounding metal particles for achieving a metallic texture with resin. Thus, problems due to poor miscibility of the metal particles and the resin have been addressed.

In exemplary embodiments which will be described below, resin particles themselves may be surface treated with metal particles and when being injection molded, resin is melted and the metal particles used in the surface treatment process are uniformly dispersed among the resin particles, whereby the resin particles have a uniform metallic texture.

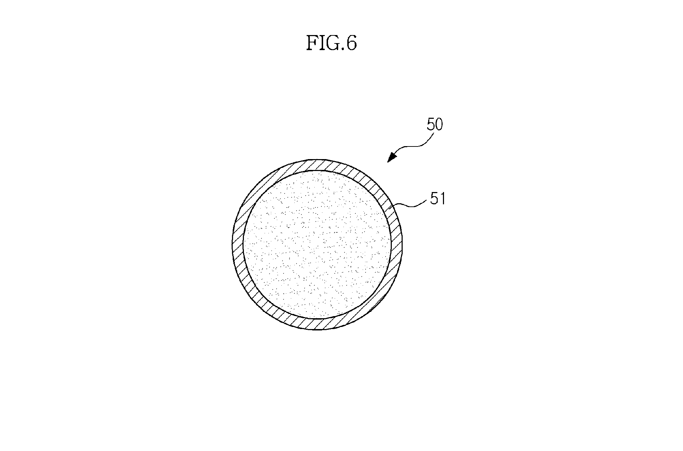

FIG. 6 is a cross-sectional view of a resin particle according to an exemplary embodiment.

The resin particle used in injection molding may be in the form of a pellet, and thus, the resin particle, which will be described below, is a resin pellet.

Referring to FIG. 6, the resin pellet, which is designated by reference number 50, is surface treated with metal particles to form a metal film 51 on a surface of the resin pellet 50. A metal used in the surface treatment may be any metal capable of obtaining a metallic texture, such as Al, Cu, Cr, Ti, Ni, Zn, or the like, and the types of metal are not limited.

As illustrated in FIG. 6, the resin pellet 50 has the metal film 51 on the surface thereof. Thus, when the resin pellet 50 is melted for injection molding, the metal particles constituting the metal film 51 are uniformly dispersed in resin and flow together with the resin, and thus, appearance defects such as concentrated dispersion of the metal particles, deficiency of the metal particles, and the like due to a difference between flow patterns of the resin and the metal particles may be reduced.

According to an exemplary embodiment, formation of the metal film 51 on the surface of the resin pellet 50 may be performed by plating. Hereinafter, a process for forming the metal film 51 on the surface of the resin pellet 50 will be described in detail.

As described above, plating is coating of a surface of a material to be plated with a thin layer of another material. For example, the metal film 51 may be formed by coating a surface of the resin pellet 50 with a thin layer of a metal material such as Al, Cu, Cr, Ti, Ni, Zn, or the like.

In exemplary embodiments, the metal film 51 may be formed by dry plating such as vacuum deposition, sputtering, or ion plating or wet plating such as immersion plating, spray plating, or electroless plating.

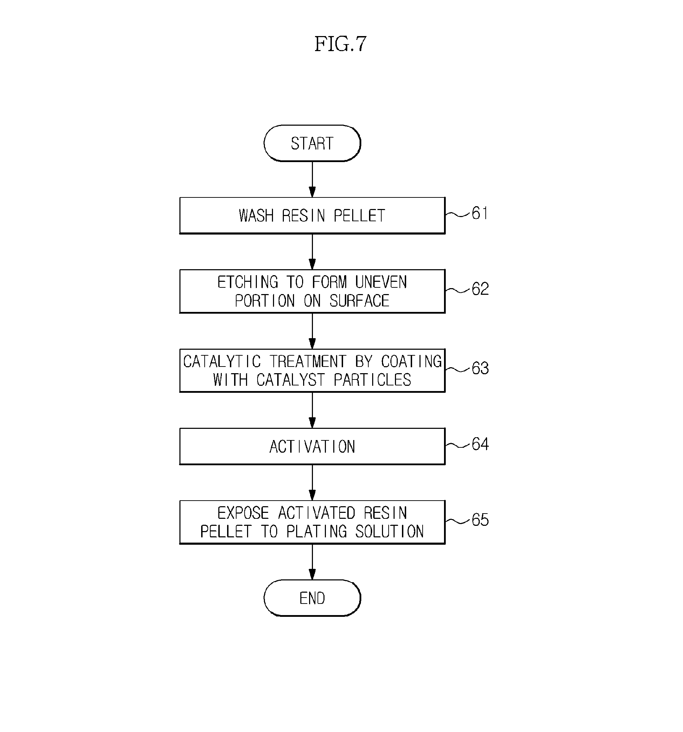

FIG. 7 is a flowchart which explains a process of forming a metal film on a surface of a resin pellet by electroless plating, according to an exemplary embodiment.

Electroless plating is a process whereby a film of another metal is formed on a surface of a metal or a non-metal using a chemical change, and is a method in which metal ions are coated by reduction without being directly supplied with electricity from the outside. A method of forming a Cu film on a surface of the resin pellet 50 will be described, below.

Referring to FIG. 7, first, to wash the resin pellet 50, oxides or impurities on the surface of the resin pellet 50 are removed therefrom using a chemical containing an acid surfactant or an alkaline surfactant (operation 61). After removal of the oxides or impurities, the resin pellet 50 is washed with water to completely remove the surfactant. A surface roughness of the resin pellet 50 varies according to the washing process, which plays an important role in deposition of a palladium solution in subsequent catalyst treatment.

Thereafter, an etching process is performed. That is, the surface of the resin pellet 50 is chemically roughened using chromic acid to form an uneven portion in the form of a sawtooth (operation 62). The uneven portion formed at the surface of the resin pellet 50 increases a contact area to improve adhesive strength of the plated film and the surface of the resin pellet 50.

The surface of the resin pellet 50 which has undergone the etching process is catalytically treated with catalyst particles (operation 63). The catalyst particles act as a core material for facilitating plating and a Pd-Sn compound is mainly used as the catalyst particles. Pd2- ions of the catalyst particles combine with Cu2+ ions, which are particles to be plated, thereby facilitating plating. According to an exemplary embodiment, the catalytic treatment may be performed such that the resin pellet 50 is exposed to a SnCl2 solution for about 1 minute, washed, and then exposed to PdCl2 for 1 minute to form a Pd-Sn core on the surface of the resin pellet 50.

Afterwards, activation treatment is performed in a state in which the Pd-Sn compound is applied to the surface of the resin pellet 50 through the catalytic treatment to force Sn and Pb to be ionized (operation 64). This process is performed to increase conductivity and affinity of Cu plating. In this regard, the ionized Sn component is removed from the resin pellet 50 by a filtering system and only metal Pb remains.

Next, the activated resin pellet 50 is exposed to a plating solution to form a plated film, i.e., a Cu film, which is designated by reference numeral 51, on the surface of the resin pellet 50 (operation 65). The plating solution includes CuSO4 for providing metal ions to be plated, formalin (HCHO) as a reducing agent, and NaOH or tetramethylammonium hydroxide (TMAH) as a pH adjuster. Examples of the reducing agent include Na3C6H5O7, NaCO2CH3, hydrazine, or a boron hydride compound. In some cases, ammonium hydroxide (NH4OH) or hydrochloric acid (HCl) may be used as the pH adjuster.

In addition, the plating solution may further include a stabilizing agent for preventing spontaneous decomposition of the plating solution caused by rapid degradation thereof because metal ions contained in the plating solution cause metal deposition on a catalyst surface and also cause metal deposition on all the contact surfaces between the plating solution and the metal ions and surfaces of colloid particles of the plating solution. Lead chloride, lead sulfide, lead nitride, thiourea, or the like may be predominantly used as the stabilizing agent.

Through all the processes described above, the resin pellet 50 with the Cu film 51 formed on the surface thereof by electroless plating may be obtained. In some exemplary embodiments, however, some of the above-described processes may not be performed or another process may be further performed.

In the embodiment illustrated in FIG. 7, the Cu film is formed on the surface of the resin pellet 50. However, exemplary embodiments are not limited thereto and the plated film 51 may be formed on the surface of the resin pellet 50 using a plating solution containing various other metal ions.

In addition, the additives and the plating solution described in the exemplary embodiment illustrated in FIG. 7 are provided for illustrative purposes only and surface treatment methods of the resin pellet are not limited to the above-described examples.

According to an exemplary embodiment, the surface treatment of the resin pellet 50 may be performed by dry plating, in addition to wet plating such as the above-described electroless plating. Hereinafter, several examples of the surface treatment of the resin pellet 50 by dry plating will be described, in detail.

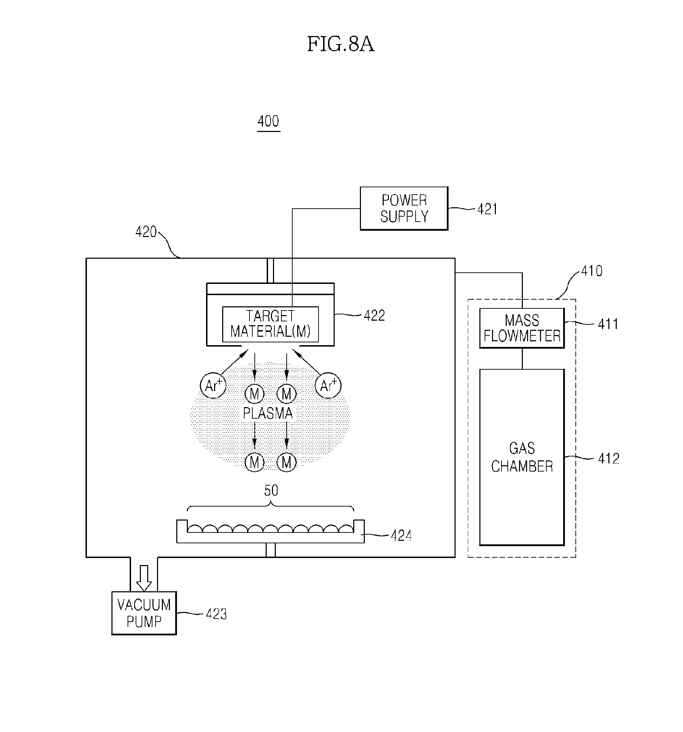

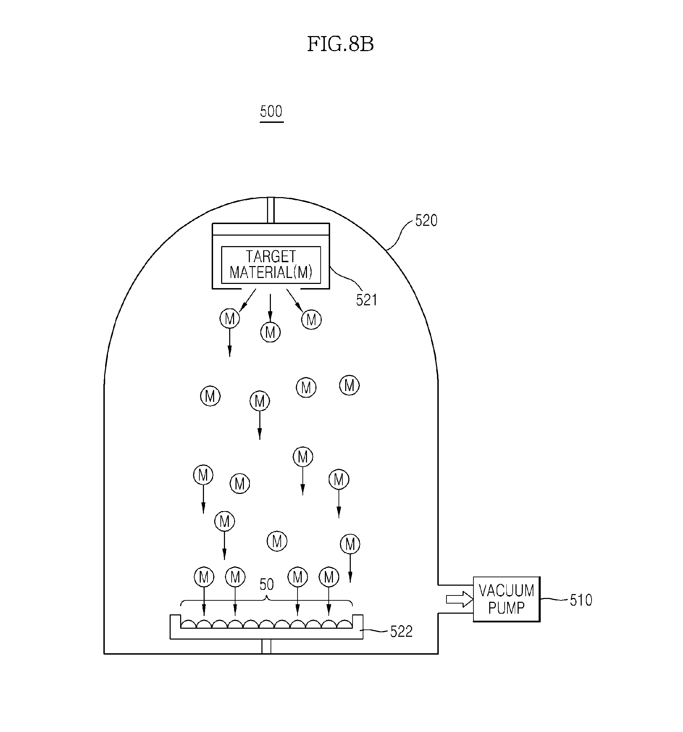

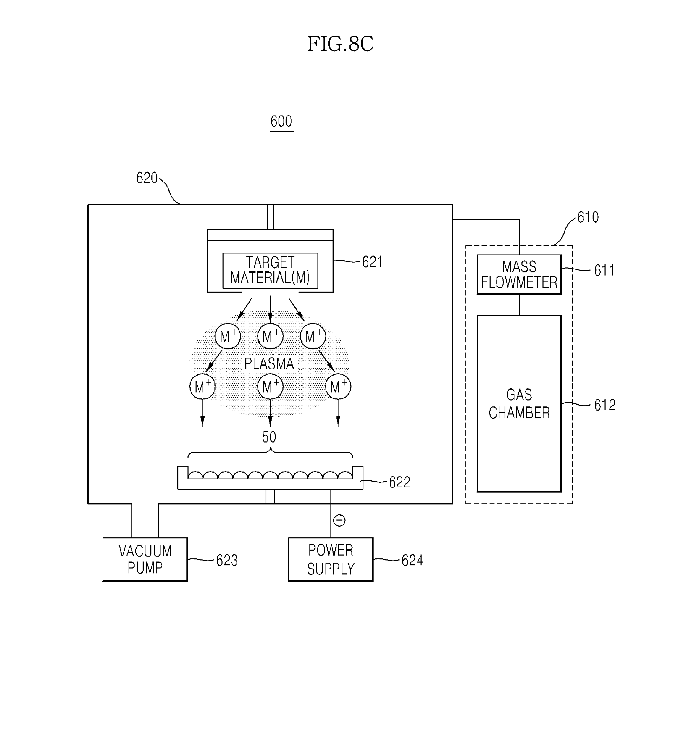

FIG. 8A is a view which illustrates a process of plating a surface of the resin pellet 50 by sputtering, according to an exemplary embodiment. FIG. 8B is a view which illustrates a process of plating a surface of the resin pellet 50 by vacuum deposition, according to an exemplary embodiment. FIG. 8C is a view illustrating a process of plating a surface of the resin pellet 50 by ion plating, according to an exemplary embodiment.

A detailed description of the sputtering, vacuum deposition and ion plating processes has already been provided in the above-described exemplary embodiment with regard to the surface treatment of the glass bubble, and thus, the exemplary embodiments illustrated in FIGS. 8A through 8C will be briefly described. Here, like reference numerals of a device used in each process denote like reference numerals illustrated in FIGS. 4A through 4C.

Referring to FIG. 8A, a target material M to be plated is disposed at an upper portion of the vacuum chamber 420 and the specimen holder 424 where the resin pellet 50 is accommodated is disposed at a lower portion of the vacuum chamber 420. The positions of the target material M and the resin pellet 50 are determined considering that the resin pellet 50 is of a particle type, and thus, the positions thereof may be reversed so long as the resin pellet 50 is fixed to the upper portion of the vacuum chamber 420.

The gun 422 is connected to a negative electrode via the power supply 421. When the power supply 421 supplies power to the gun 422, a negative electric field is formed and discharge starts and thus plasma is generated.

In this regard, primary and secondary electrons to be ionized are bombarded with Ar gas injected into the vacuum chamber 420 and thus the Ar gas is dissociated into cations (i.e., Ar+) and electrons. The Ar+ ions are accelerated toward the target material M, acting as a negative electrode, by the electric field and the accelerated Ar+ ions are bombarded with the target material M to transfer energy to a surface of the target material M, which leads to ejection of atoms from the target material M. The ejected atoms are attached to the surface of the resin pellet 50 disposed at the lower portion of the vacuum chamber 420.

Referring to FIG. 8B, the specimen holder 522 in which the resin pellet 50 is accommodated is disposed at a lower portion of the vacuum chamber 520 maintained in a high vacuum state by the vacuum pump 510, and the target material holder 521 for holding the target material M to be coated on a surface of the resin pellet 50 is disposed at an upper portion of the vacuum chamber 520. When the target material M is heated by electric resistance or electron beams, the target material M is evaporated and dispersed. The resin pellet 50 has a relatively low temperature as compared to the evaporated target material M, and thus, gaseous atoms of the target material M reaching the resin pellet 50 are condensed on the surface of the resin pellet 50 to form a thin film.

Referring to FIG. 8C, the gas chamber 612 in which Ar gas is accommodated is connected to the vacuum chamber 620 via the mass flowmeter 611 of the gas supply system 610, the specimen holder 622 in which the resin pellet 50 is accommodated is disposed at a lower portion of the vacuum chamber 620 maintained in a vacuum state by the vacuum pump 623, and the target material holder 621 for holding a target material M to be coated on a surface of the resin pellet 50 is disposed at an upper portion of the vacuum chamber 620. When a negative voltage is applied to the specimen holder 622 via the power supply 624 and Ar gas is injected into the vacuum chamber 620, plasma is generated. Then, when the target material M is evaporated by heating using the same method as used in the above-described vacuum evaporation method, evaporated metal particles are excited to an ionization state by the plasma, the surface of the resin pellet 50 accommodated in the specimen holder 622 to which the negative voltage is applied is bombarded with ionized metal particles M+, and thus, the ionized metal particles M+ having very high energy are adsorbed onto the surface of the resin pellet 50, thereby forming a thin film thereon.

When the target material M to be plated on the surface of the resin pellet 50 is a metal material, the metal material may be plated on the surface of the resin pellet 50 using one of the surface treatment processes illustrated in FIGS. 8A through 8C.

In addition, in the exemplary embodiments illustrated in FIGS. 8A through 8C, the specimen holder 424, 522 or 622 for accommodating the resin pellet 50 may be vibrated or rotated so that the entire surface of the resin pellet 50 is uniformly surface treated by plating.

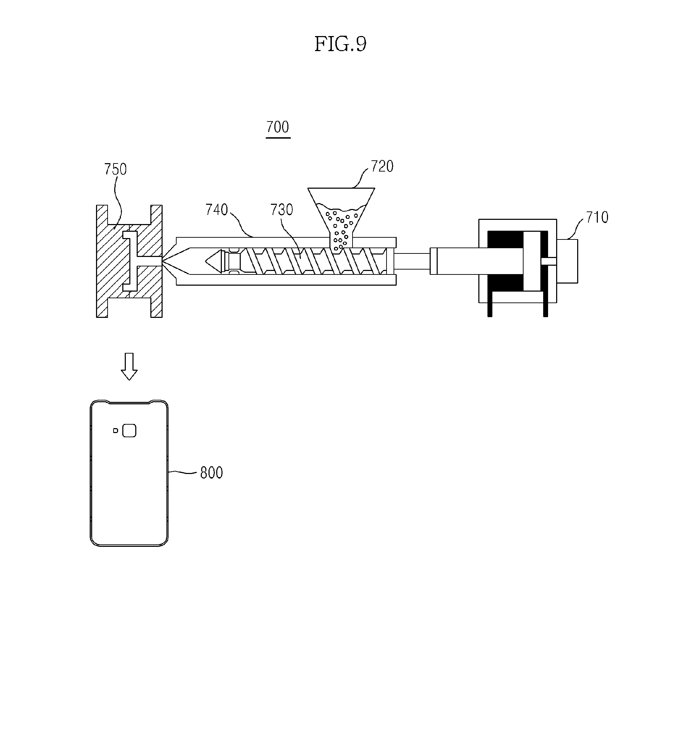

FIG. 9 is a view which illustrates the manufacture of an injection molded product 800 including the master batch according to an exemplary embodiment and a resin raw material or including the resin pellet according to the exemplary embodiment.

Referring to FIG. 9, a compound 300 including the master batch 200 and the resin raw material, which is designated by reference numeral 11, or the resin pellet 50 is added to a hopper 720 of an injection molding machine 700 to be supplied to a heating cylinder 740. When a heater heats the compound 300 or the resin pellet 50 considering a melting point of the resin raw material, the compound 300 or the resin pellet 50 is melted, and when a hydraulic motor 710 pushes a screw 730, the melted compound 300 or the melted resin pellet 50 flows into a mold 750 by the screw 730. The mold 750 may have various shapes according to the purpose of the injection molded product 800. In the exemplary embodiment illustrated in FIG. 9, a mold in the form of an exterior of a mobile phone is used to manufacture a plastic exterior of a mobile phone having a metallic texture, as the injection molded product 800.

When the compound 300 including the master batch 200 and the resin raw material 11 is injection molded, the glass bubbles 100 included in the master batch 200 have a similar specific gravity to that of resin, in particular, plastic, and thus, appearance defects of the injection molded product 800 due to a difference between flow patterns thereof may be prevented.

When the resin pellet 50 with the metal film 51 formed on the surface thereof is injection molded, the resin pellet 50 is melted and thus metal particles included in the metal film 51 are uniformly dispersed among the resin pellets 50. Accordingly, concentrated dispersion of the metal particles or deficiency thereof may be prevented.

Therefore, the injection molded product 800 may itself have a uniform metallic texture. Exemplary embodiments are not limited to the exemplary embodiment illustrated in FIG. 9, and injection molding may be performed using various methods according to various types of injection molded products.

In addition, an exterior may be manufactured to have a metallic texture using various methods, in addition to the above-described method in which the glass bubbles 100 are compounded with an exterior material to be used in injection molding.

By using the glass bubbles 100 according to the above exemplary embodiment, reduction in raw material costs due to simplified manufacturing processes may be achieved, and the injection molded product 800 according to the above-described exemplary embodiment may be environmentally friendly and recyclable.

In addition, a difference between specific gravities of the glass bubbles 100 and an exterior material may be minimized and thus appearance defects due to a difference between flow patterns thereof may be prevented. In addition, the glass bubbles 100 have a spherical shape and thus appearance defects due to orientation phenomenon may be prevented.

Moreover, the master batch according to the above-described exemplary embodiment has improved miscibility with a resin used as an exterior material, and thus may obtain excellent metal texture.

Furthermore, when the resin pellet according to the above-described exemplary embodiment is injection molded without compounding with metal particles, the resin pellet may itself have a metallic texture, and thus, appearance defects due to a difference between flow patterns of resin and metal particles may be prevented.

As is apparent from the above description, reduction in raw material costs due to simplified manufacturing processes may be achieved using a glass bubble according to an exemplary embodiment, a difference between specific gravities of the glass bubble and an exterior material may be minimized and thus appearance defects due to a difference between flow patterns thereof may be prevented, and appearance defects due to orientation phenomenon may be prevented.

In addition, a master batch according to an embodiment has an improved miscibility with resin used as an exterior material, and thus may obtain excellent metal texture.

In addition, an injection molded product according to an exemplary embodiment may be recyclable and environmentally friendly.

According to a method of manufacturing a resin particle according to an exemplary embodiment and an injection molded product including the same, the resin particle and metal particles coated on a surface of the resin particle are melted together when injection molding for manufacturing an exterior is performed and thus the metal particles are uniformly dispersed among the resin particles. Accordingly, appearance defects due to a difference between flow patterns of the resin and metal particles may be prevented.

Although a few exemplary embodiments have been shown and described, it would be appreciated by those skilled in the art that changes may be made in these exemplary embodiments without departing from the invention, the scope of which is defined in the claims.

## Claims

1. A glass bubble with a metallic texture, the glass bubble comprising:
a spherical shell; and
a surface treatment layer formed on a surface of the spherical shell,
the spherical shell has a hollow hole inside so as to decrease a specific gravity of the glass bubble, wherein the surface treatment layer is formed by surface treatment to obtain a metallic texture.

2. The glass bubble according to claim 1, wherein the surface treatment layer comprises metal particles.

3. The glass bubble according to claim 1, wherein the surface treatment is performed by at least one of sputtering, plating and deposition using a metal material.

4. The glass bubble according to claim 1, wherein the glass bubble has a specific gravity of about 0.2 to about 2.5.

5. The glass bubble according to claim 1, wherein the glass bubble has a diameter of about 5 to about 700 µm.

6. The glass bubble according to claim 4, wherein the glass bubble has a specific gravity of about 0.95 to about 1.4.

7. A master batch comprising:
glass bubbles each comprising a spherical shell and a surface treatment layer formed on a surface of the shell, the spherical shell having a hollow hole inside so as to decrease a specific gravity of the glass bubble and the surface treatment layer being formed by surface treatment to obtain a metallic texture; and
a resin in which the glass bubbles are dispersed.

8. The master batch according to claim 7, wherein the resin is plastic.

9. The master batch according to claim 8, wherein the glass bubbles have a specific gravity of about 0.2 to about 2.5.

10. The master batch according to claim 8, wherein the surface treatment is performed by at least one of sputtering, plating and deposition using a metal material.

11. The master batch according to claim 8, wherein the amount of the glass bubbles is about 0.1 to about 50 wt%.

12. An injection molded product manufactured by compounding a master batch including glass bubbles; each glass bubble including a spherical shell and a surface treatment layer formed on a surface of the shell, the spherical shell having a hollow hole inside so as to decrease a specific gravity of the glass bubble and the surface treatment layer being formed by surface treatment to obtain a metallic texture; and a resin in which the glass bubbles are dispersed.

13. The injection molded product according to claim 12, wherein the amount of the glass bubbles of the master batch is about 0.1 to about 50 wt%.

14. The injection molded product according to claim 12, wherein the glass bubbles have a specific gravity of about 0.2 to about 2.5.

15. The injection molded product according to claim 12, wherein the surface treatment is performed by at least one of sputtering, plating and deposition using a metal material.
